# EUROPEAN PATENT SPECIFICATION

(11) **EP 1 441 597 B1**
(45) Date of publication and mention of the grant of the patent: **23.09.2009**
(21) Application number: 02747438.6
(22) Date of filing: 25.06.2002
(51) Int. Cl.: A23G 1/00, A23G 1/04

(54) **MANIPULATION OF CHOCOLATE FLAVOUR**
MANIPULATION VON SCHOKOLADENAROMA
MANIPULATION DE L'AROME DU CHOCOLAT

(30) Priority: 30.10.2001 GB 0126025
(43) Date of publication of application: 04.08.2004
(73) Proprietor: SOCIETE DES PRODUITS NESTLE S.A., 1800 Vevey (CH)
(72) Inventor: KOCHHAR, Sunil, 1073 Savigny (CH); BUDWIG, Christopher, Dublin, OH 43017 (US); HANSEN, Carl, Erik, CH-1066 Epalinges (CH); JUILLERAT, Marcel Alexandre, 1000 Laussane 26 (CH); SPADONE, Jean-Claude, CH-1814 La Tour-De-Peilz (CH); NICOLAS, Pierre, CH-1806 Saint-Legier (CH); REDGWELL, Robert, CH-1073 Savigny (CH); ARMSTRONG, Euan, Leeds, LS17 6LG (GB); SIEVERT, Dietmar, CH-1066 Epalinges (CH)
(74) Representative: Ducreux, Marie
(86) International application number: PCT/EP2002/007055
(87) International publication number: WO 2003/037100

(56) References cited:
- CH-A- 532 365
- DE-A- 3 331 445
- DE-A- 3 803 180
- GB-A- 1 540 636
- GB-A- 2 033 721
- US-A- 2 957 769
- US-A- 3 985 607
- US-A- 4 861 615
- US-A- 5 676 993
- US-A- 5 989 619
- DATABASE WPI Section Ch, Week 199837 Derwent Publications Ltd., London, GB; Class D13, AN 1998-430878 XP002215013 & JP 10 179078 A (MEIJI SEIKA KAISHA LTD), 7 July 1998 (1998-07-07)
- PATENT ABSTRACTS OF JAPAN vol. 018, no. 421 (C-1234), 8 August 1994 (1994-08-08) & JP 06 125710 A (LOTTE CO LTD), 10 May 1994 (1994-05-10)

## Description

### Field of the Invention

The present invention relates to processes for the manipulation of the flavour of chocolate independently of the processes, formulations and ingredient origins used in the preparation of chocolate.

### Background to the Invention

The process of making chocolate is described in "Industrial Chocolate Manufacture and Use", edited by S.T.Beckett, (Third Edition, 1999, Blackwell Science) the contents of which are incorporated by reference.

Chocolate is generally obtained by mixing sugar and cocoa butter with cocoa liquor or cocoa nibs, followed by refining, conching and tempering. Milk chocolate is prepared in a similar way but with the addition of milk. One traditional method of producing milk chocolate (dry process) is by mixing milk powder together with cocoa liquor or cocoa nibs, sugar, and cocoa butter, followed by refining, conching and tempering. Another traditional method of producing milk chocolate (wet process) is by condensing and drying either liquid milk or milk concentrate together with sugar with or without cocoa liquor normally under vacuum and at elevated temperatures to produce a chocolate crumb powder and then mixing the chocolate crumb powder with cocoa butter, cocoa liquor, followed by refining, conching and tempering. Optionally, the cocoa butter may be partially or totally replaced by direct cocoa butter replacements, stearines, coconut oil, palm oil, butter or any mixture thereof to give substitute chocolate materials which are generally referred to as compound, couvertures or ice cream coatings. In this invention, the term "chocolate" includes standard chocolate as well as substitute chocolate such as compound, couvertures or ice cream coatings.

Local chocolates are often unique and contain flavours that are important for the consumer and it has been known for many years to add flavours to chocolate. This is done for two reasons, firstly, modification or enhancement of the cocoa or dairy flavour, e.g. to give a rounded smoothness to the profile or to create a creamy note, which is usually done by adding up to 0.2% of vanilla, vanillin, ethyl vanillin, etc., and secondly, to impose a different, overriding, dominant but compatible flavour, e.g. by adding orange oil, peppermint oil, strawberry, raspberry, etc.

However, it is well known that there are a large number of different consumer-recognisable flavour attributes associated with chocolate, other than the mere enhancement of the chocolate flavour or a different overriding, dominant flavour, which vary considerably around the world according to local consumer preferences. These flavour attributes of chocolate products are determined by variations in the process and the amounts of the normal ingredients used in chocolate manufacture, e.g. cocoa and milk. These flavour attributes may be, for example, roasted, sweet, bitter, crumb, caramel, fruity, floral, biscuit, bouquet, spicy, scented, baked, bready, cereal, popcorn, malty, astringent and praline. Such flavour attributes are well-known in the cocoa trade where they form part of the vocabulary. Consequently, local chocolates are often unique and contain flavour attributes that are important for the consumer.

Some manufacturers produce chocolate by using chocolate ingredients and a process which only gives one flavour attribute to give a specific house flavour and the manufacturing plants are only able to produce a limited variation around this flavour. However, for a chocolate product containing chocolate and another ingredient, e.g. a chocolate biscuit or a product comprising a centre coated with chocolate, it is important to match the chocolate flavour attribute with the flavour intensity type of the other ingredient. For example, a cooked chocolate flavour attribute is desirable for a chocolate biscuit, a strong cocoa flavour attribute is required to offset a mint flavour intensity type whereas only a mild flavour attribute is required for praline which has a low intensity flavour. It would be very desirable to be able to manipulate the flavour associated with chocolate produced by a single process to obtain a flavour attribute of one's choice by adding the desired flavour attribute to a single chocolate mass irrespective of the process of preparation of the chocolate mass, the formulations and the ingredient origins.This would lead to the operation of a highly flexible chocolate plant. By "flavour attribute" in this invention, we mean a consumer-recognisable flavour attribute associated with chocolate, and not the mere enhancement of the chocolate flavour, e.g. by adding vanilla, or a different overriding, dominant flavour such as peppermint.

CH-A-532365 relates to a method for the fabrication of chocolate paste, especially milk chocolate paste, wherein cocoa is deodorized and the paste obtained by incorporating the deodorized cocoa is finished without conching.

US-A-4861615 discloses a method and an apparatus for the preparation of a chocolate mixture wherein as compact and inexpensive a construction of the apparatus as possible and a short sojourn time with very satisfactory aroma quality of the finished product are achieved in a continuous process with the elimination of batch mixers and conching.

DE-A-3803180 discloses a process for the heat treatment of cocoa and/or cocoa products, containing constituents forming at least some volatile aroma substances on heating, which is carried out in such a way that the isolated aroma substance is fed back during the treatment, in particular at the end. This is preferably carried out in such a manner that the vapours forming during the heating are taken off; the aroma substances, in particular pyrazine, contained in the vapours taken off are recovered and added back to the seed material. During the heat treatment acids and undesirable volatile flavours in addition to pyrazine are taken off. The desirable pyrazine is recovered by means of a binder such as a vegetable fat, e.g. cocoa butter while the undesirable acids are neutralised by, e.g. milk of lime, and separated. The desirable pyrazine is then added back.

GB-A-1540636 describes a method for the production of milk chocolate including the steps of passing roasted cocoa kernel fragments through a grinding mill, passing the batch obtained alternately into a respective trough of a batch mixer or kneader having two mixing or kneading troughs and adding cocoa butter and powdered milk, removing continuously from the other trough, during the treatment of said batch, a second such batch whose treatment has been completed and subjecting said second batch to a thin layer refining treatment, adding sugar and lecithin to the second batch after refining, and passing the second batch alternately to a respective trough of a further batch mixer or kneader having two mixing or kneading troughs wherein the second batch is homogenised, during which is continuously removed from the other trough of the further mixer or kneader a third such batch whose homogenising treatment has been completed. It states at page 2, lines 39-42 "A relatively long lasting conche treatment or refining time, which in itself is an obstruction to a fully continuous treatment, is therefore no longer required".

We have found, surprisingly, that by removing at least some of the natural flavour from the chocolate ingredients or the chocolate mass and then adding the desired flavour attribute to the chocolate mass, it is possible to manipulate the flavour associated with chocolate of the chocolate by adding the desired flavour attribute to a single chocolate mass irrespective of the process of preparation of the chocolate mass, the formulations and the ingredient origins. Thus a single manufacturing plant will become far more flexible and able to produce a full range of flavours.

### Summary of the Invention

According to the invention, there is provided a process for manipulating the flavour of a single mass of chocolate which comprises first reducing or removing the natural flavour from the chocolate ingredients or the chocolate mass **by stripping** and then adding to the chocolate mass from 0.001 % to 10% by weight based on the weight of the chocolate mass of a flavour attribute associated with chocolate and obtained by adding cocoa and/or milk/dairy flavours or by adding non-cocoa/dairy flavours to a single mass.

This provides a flavour attribute associated with chocolate and overcomes the variations in chocolate flavour obtained in the manufacture of chocolate using different processing conditions and/or ingredients.

### Detailed Description of the Invention

The chocolate mass may be a standard chocolate such as dark, milk, white chocolate or it may be a compound or ice cream coating. The milk or white chocolate mass may be a crumb chocolate or a non-crumb chocolate. Non-crumb chocolates are preferred in this process as they have less intense flavours.

The natural chocolate flavour as determined by variations in the process and the amounts of the normal ingredients used in the particular chocolate manufacture may be reduced or removed from the chocolate mass, for example, by stripping using the following methods:
a) by pretreating cocoa during or following roasting with water which is later evaporated and takes with it the flavour. The amount of water may easily be determined by those skilled in the art according to requirements but is not usually more than 20% by weight based on the weight of the cocoa and is conveniently from 5% to 10% by weight.
b) adding water to liquid chocolate as it is processed by a high shearing/drying machine, e.g. a Petzomat machine. The amount of water may easily be determined by those skilled in the art according to requirements but is not usually more tham 20% by weight based on the weight of the cocoa and is conveniently from 5% to 10% by weight.
c) avoiding the use of commercially available high heat-treated milk powders which possess strong cooked "Maillard" flavours.
d) other known technologies for removing volatiles, such as spinning discs, PDAT reactors (Carle & Montanari) with inert gas, or scraped surface heat exchangers with forced air or vacuum applied.

When adding and removing water during these methods of reducing or removing natural chocolate flavour, care should be taken not to use too much heat otherwise caramelisation may occur and hence undesirable or burnt flavour formation, especially for milk chocolate.

It should be understood that these methods of reducing or removing natural chocolate flavour are carried out in addition to the common unit operations carried out during normal chocolate manufacture, but may be a continuation of the normal process, e.g. conching initially removes unwanted acidic flavours, but if extended can produce a very bland chocolate.

By reducing or removing the existing cocoa/dairy flavours from the chocolate mass, it is possible to prepare a base chocolate with a low intensity flavour which may or may not be bland, whatever the original chocolate ingredients or process used, and then add flavour attributes according to the market requirements.

The cocoa and/or milk/dairy flavours or the non-cocoa/dairy flavours may be, for example, natural, nature identical, artificial or plant extract flavours.

The amount of flavour attribute added to the chocolate mass may be determined according to requirements and may conveniently be from 0.00 1 % to 5%, preferably from 0.0 1 % to 4%, more preferably from 0.1 to 2.5% and especially from 0.2% to 2% by weight based on the weight of the chocolate mass.

The flavour attributes may be any of the following: roasted, sweet, bitter, crumb, caramel, fruity, floral, biscuit, baked, bready, popcorn, cereal, malty, astringent or praline. The flavour attribute may be a single ingredient or a mixture of ingredients, e.g. a bottle flavour or an extracted flavour, or it may be a reaction flavour formed from a mixture of flavour precursors. For example, a crumb flavour attribute may be added to a non-crumb chocolate having a reduced flavour as compared with a normal crumb chocolate in amounts, for example, from 0.1% to 5% and may provide very desirable flavours.

Examples of cocoa/dairy flavour attributes that may be added to the chocolate mass are as follows:

Cocoa and/or chocolate product (i.e. nibs, liquor, cocoa powder, chocolate, cocoa butter, conch mass, etc.) distillates, solvent extracts, CO2 extracts, and a cocoa aroma/flavour obtained by cryogenic aroma capture from aroma gas which evolves during the processing of cocoa , for example, as described in United States Patent No.6090427.

Natural, artificial, plant extract flavours or nature identical compounded flavours labelled as chocolate, milky, dairy, cream, cocoa, etc., if the name infers chocolate or milky.

Cocoa/chocolate reaction flavours known to those familiar to the art.

Dairy products or biogenerated flavours and/or intermediates in flavour compound generation (hydrolyzed milk fat, cultured products, enzyme generated flavours or intermediates).

Examples of non- cocoa/dairy flavour attributes that may be added to the chocolate mass are as follows:
1) The flavour attribute may be a concentrate formed by adding a mixture of flavour precursors comprising
   (A) proline, ornithine or protein hydrolysate, and
   (B) rhamnose, fructose or fucose,
   to a fat-based medium and heating the mixture to about 100-140°C for about 10-120 minutes. This flavour attribute may provide caramel and biscuit/cookie attributes to the chocolate. The amount of this flavour attribute added to the chocolate may be from 0.01-5% by weight based on the total weight of the chocolate.

Preferably, the reaction is performed at 100-150°C for from 10 to 60 minutes, preferably from 115 °C to 135°C for from 20-40 minutes. The concentration of the flavour precursors may be about 5-250 mM, preferably about 50 mM. Preferably, the fat-based medium is anhydrous milk fat, cocoa butter, lipase hydrolysed milk fat, cocoa liquor, butter, vegetable oils, medium chain triglycerides (MCT), triacetin, tropical fats and their fractions.

Preferably, the flavour precursors are proline, rhamnose and fructose. Other combinations of flavour precursors include fucose and ornithine. Milk or vegetable protein hydrolysates may be used, and are prepared from milk powder, casein, whey, soy, wheat, cotton, peanut, rice or pea protein isolates or concentrates.

Preferably, the flavour reactions may be performed by the following processes:
i) The fat-based media is heated and the flavour precursors (A) and (B) are dispersed in the melted fat-based medium and reacted under reflux at 125 °C. This preferably occurs under agitation. In this process, the flavour precursors are added directly in the fat-based medium without any addition of moisture.
ii) The flavour precursors A and B may also be dissolved in alkaline water solution, buffer at pH 5.0 - 8.0 or 5-50% potassium carbonate solution to form a flavour precursor solution or suspension which is then added at less than 1.5% level (w/w) to the melted fat and reacted with agitation under reflux at 125 °C. Preferably, pH of the mixture before the reaction is 8.0.
iii) The flavour precursors A and B may also be dissolved in alkaline water solution, buffer pH 5.0 - 8.0 or 0.1-50% potassium carbonate solution. The flavour precursor solution or suspension generated is added at 1.5-5% level (w/w) to the melted fat-based medium, the reaction mixture thus obtained is heated under agitation for 10-20 minutes from 100 °C to 125 °C, without closing the vessel to evaporate most of the moisture, and the remaining 10-20 minutes of the reaction is performed at 125°C under agitation and reflux. Preferably, the total reaction time is about 30 minutes. Preferably, pH of the mixture before reaction is 8.0.

Preferably, rhamnose and proline flavour precursors were used which were dissolved in 5% buffer (100 mM Na-phosphate pH 8.0) and added to the heated fat-based medium, preferably anhydrous milk fat. The reaction mixture was heated for 10 minutes from 100 °C to 125 °C without closing the reactor to evaporate most of the water. The remaining 20 minutes of the reaction was performed at 125°C under reflux in the fat-based medium. This process allows maximum 4-hydroxy-2,5-dimethyl-3(2H)-furanone concentration to be obtained. Thus, the present invention has surprisingly positive results in the generation of caramel and biscuit flavour attributes using fat-based media as compared to classical aqueous systems.

Proline was used as amine flavour precursor, as proline is a precursor for caramel as well as biscuit/bread/roast type aroma volatiles. The reaction between proline and rhamnose in a fat-based medium produces a range of flavour active compounds. 4-hydroxy-2,5-dimethyl-3(2H)-furanone and 2-acetyl-1-pyrroline which are involved in caramel and biscuit/bread/roast flavour attributes respectively, were used as chemical markers in the described invention. 4-hydroxy-2,5-dimethyl-3(2H)-furanone was the major compound in most of the reaction flavour products. The rich and balanced flavour attribute was most likely achieved by a mixture of several compounds generated in the reaction. Examples of other compounds in the reaction mixture were 3-hydroxy 2-butanone (acetoine), 1-hydroxy 2-propanone (acetol), 5-methyl furfural, 2-hydroxy 3-methyl 2-cyclopenten-1-one (corylone) and 4-acetoxy 2,5-dimethyl-3(2H)-furanone.

Surprisingly, it was found that proline resulted in the highest level of 4-hydroxy-2,5-dimethyl-3(2H)-furanone accumulation in fat-based reaction systems. However, the aroma of the flavour concentrates may not be linked or limited to any of the compounds mentioned.

Addition of 5% buffer, pH 8.0 facilitated improved flavour precursor solubility and subsequent high 4-hydroxy-2,5-dimethyl-3(2H)-furanone generation and intense caramel flavour of the fat mixture. However, reduction of the aqueous phase to, for example, 1.5% can be beneficial to avoid the first stage of the reaction including moisture evaporation. It is possible to perform the reaction without any addition of aqueous solution along with the flavour precursors. In particular, this method is preferred in order to stabilize certain aroma compounds directly in the fat phase.

All fat-based reactions with rhamnose resulted in intense caramel and biscuit/cookie flavour attributes. Reactions with fructose, which is a cheaper sugar flavour precursor, resulted in substantially lower amount of 4-hydroxy-2,5-dimethyl-3(2H)-furanone. The 4-hydroxy-2,5-dimethyl-3(2H)-furanone level as well as the caramel flavour could be increased by increasing the ratio of fructose to proline. Reactions in anhydrous milk fat with 50 mM proline and 100 mM fructose resulted in a further increase in 4-hydroxy-2,5-dimethyl-3(2H)-furanone level and a strong caramel and biscuit/cookie flavour attribute. Thus, fructose and proline can also be used as flavour precursor combination in fat-based flavour reaction.

A further aspect of this invention is directed to the use of the flavour concentrates as described above in the manufacture of chocolate (including compound) using 0.01-5%, preferably 0.5% by weight of the flavour concentrate, based on the weight of the total chocolate. Preferably, the flavour concentrate is incorporated directly into the chocolate. As the flavour concentrate is generated directly in chocolate compatible ingredients, no drying or extraction is necessary before incorporation into the chocolate mass. These flavour concentrates impart caramel and/or cookie/biscuit note in the chocolate. The flavour concentrate can be added alone or in combination with other flavours.

The chocolate product with modified flavour characteristics comprising the flavour concentrate as described above include milk, dark and white chocolate as well as compound coatings for use for example in bars or ice-cream coatings.
2) The flavour attribute may be an enzymatic hydrolysate of cocoa polysaccharides, e.g. from the cocoa shell, e.g. pectin. Such flavours may provide caramel, biscuit or toffee flavour attributes and may be incorporated in an amount below 5% into the chocolate

According to one aspect of this invention provides a cocoa shell pectin extract having a rhamnose content of approximately 5mM to approximately 100 mM. According to a further aspect this invention provides a process for the preparation of a cocoa shell pectin hydrolysate having a rhamnose content of approximately 5mM to approximately 100mM comprising the chemical and/or enzymatic hydrolysis of cocoa shell pectin. According to a still further aspect this invention provides a cocoa shell pectin hydrolysate having a rhamnose content of approximately 5mM to approximately 100mM. According to another aspect this invention provides a flavour concentrate comprising cocoa shell pectin hydrolysate according to the present invention. According to yet another aspect this invention provides the use of a cocoa shell pectin hydrolysate according to the present invention as a flavour concentrate for food.

It has surprisingly been found that the pectin from cocoa shell contains an unusually high rhamnose content of approximately 5 to 7% by weight rhamnose based on the dry weight of pectin. Thus, the present invention provides a new rich source of rhamnose which can be used to generate new flavour profiles when added to food products.

The preparation of cocoa shell pectin extracts is carried out using a standard procedure for extracting pectins.

Hydrolysis of the cocoa shell pectin extracts is carried out by chemical and/or enzymatic degradation. Preferably, the following enzymes and chemicals are used, acetic acid, hydrochloric acid, pectinolytic enzymes (polygalacturonase, rhamnogalacturonases, pectin lyase, arabinase, galactanase) in association with esterases such as rhamnogalacturonan acetylesterase or with exoglycosidases such as beta-galactosidase, arabinofuranosidase and fucosidase. Mixtures of these enzymes can be found in commercial enzyme preparations produced by fermentation of microorganisms on suitable complex media.

Any suitable reaction medium for flavour generation may be used including, aqueous solutions, ethanol, propyleneglycol, glycerol, or a fat-based medium such as, anhydrous milk fat, cocoa butter, cocoa liquor, compound fat, lipase hydrolysed milk fat, butter, vegetable oils, medium chain triglyceride, triacetin or tropical fats and their fractions.

The cocoa shell pectin hydrolysate can be reacted with individual free amino acids, peptides, protein hydrolysates or mixtures of amine flavour precursors.

Preferably, the preparation of flavour concentrates involves the addition of cocoa shell pectin hydrolysate to a fat-based medium, most preferably milk fat, together with proline and a phosphate buffer at pH 8.0, 125°C for approximately 60 minutes. Preferably, the cocoa shell pectin hydrolysate and proline flavour precursors used are dissolved in 5% buffer (100 mM Na-phosphate pH 8.0) and are added to the heated fat-based medium, preferably anhydrous milk fat. The reaction mixture is heated for 10 minutes from 100°C to 125°C without closing the reactor to evaporate most of the water. The remaining 20 minutes of the reaction is performed at 125°C under reflux in the fat-based medium. Addition of 5% buffer, pH 8.0 facilitates improved flavour precursor solubility and subsequent high 4-hydroxy-2,5-dimethyl-3(2H)-furanone generation and intense caramel flavour attribute of the fat mixture.

The rhamnose containing cocoa shell extract may be used in different flavour reactions including applications for sweet (e.g. caramel, biscuit, buttery, toffee, fruity, malty, roasted) and savory or culinary products. The flavour concentrates produced can be incorporated into foods such as confectionery products, chocolate, beverages, ice-cream, biscuits and baked products, savoury and culinary products. It may be used in chocolate manufacture including the manufacture of milk, dark and white chocolate as well as compound chocolate for use in, for example, bars and ice-cream coatings.
3) A malty flavour attribute may be obtained by acid treatment of a cocoa liquor followed by a protease treatment.

According to one aspect of this invention there is provided a process for the production of enzymatically-treated unfermented cocoa liquor comprising acid treatment of the cocoa liquor followed by protease treatment. Another aspect of this invention is the use of enzymatically hydrolysed cocoa liquor in generation of process flavour reactions. A still further aspect of this invention is a chocolate or compound product produced using a process flavour made using the enzymatically treated cocoa liquor.

The acid treatment is performed as an *in-vitro* fermentation step to activate the endogenous enzyme system and to utilize the endogenous proteases in cocoa. The subsequent protease treatment is applied to obtain high degree of hydrolysis (DH) and a high level of reactive free amino acids and peptides. This treatment is used to increase the flavour precursor pool during chocolate flavour reactions. Cocoa hydrolysates produced in accordance with this process are used as an ingredient in process flavour reactions. The cocoa liquor hydrolysates may be used alone or together with other ingredients or flavour precursors, such as amino acids, peptides or sugars, as a source of amine flavour precursors in process flavour reactions.

The cocoa liquor may be fully or partially defatted prior to use. Such use of fully or partially defatted cocoa liquor enables flexible use of different cocoa materials as a base ingredient in process flavour reaction. Preferably, the acid treatment involves decreasing the pH of the unfermented cocoa liquor to approximately pH 2 to 5, most preferably to pH 4. Preferably, acetic acid, citric acid or phosphoric acid is used at a concentration of from about 0.01 to about 1.0 M. Protease treatment involves the incubation of the unfermented cocoa liquor mixture with an endoprotease and/or exoprotease. Preferably, from 0.1 % to 5% protease based on dry weight of cocoa is used. Most preferably, the cocoa is incubated with 0.1 M acetic acid at 50 °C for 6 hours, followed by treatment with 2% protease, based on dry weight of cocoa, for 18 hours at 50 °C. Treatment times for both the acid and protease treatment are preferably from 1 to 48 hours.

The treated cocoa liquor can be used in process flavour reactions. In the flavour reactions generation of a balanced cocoa flavour is not the only criterion. The introduction of other attributes, for example caramel, biscuit, fruity and malt are also of interest. Thus, another objective was to produce a cocoa ingredient with a maximum degree of hydrolysis for use in chocolate flavour reactions.

The process flavour attributes made using the treated cocoa liquor can be used in the manufacture of standard chocolate, compound chocolate, ice-cream coatings and in other food products, desserts and drinks.
4) A caramel flavour attribute may be provided by the reaction of skimmed milk powder in a fat such as milk fat, cocoa butter, cocoa butter substitute, cocoa liquor, vegetable fats or combinations of fats at an elevated temperature. The amount of skimmed milk powder may be from 0.5% to 50% by weight based on the weight of the mixture. The temperature of the reaction may be from 100°C to 150°C and preferably from 115°C to 135°C. The duration of the reaction may be from 15 minutes to 2 hours and preferably from 30 to 90 minutes. The caramel flavour attribute may be incorporated into chocolate from which the natural flavour has been reduced or removed in an amount from 0.1% to 5% and preferably from 0.5% to 2% by weight based on the weight of the chocolate.

The present invention also provides a process for manipulating the flavour of a single mass of chocolate to provide a chocolate having a flavour attribute other than chocolate flavour enhancement or an overriding, dominant flavour different to chocolate and which flavour attribute overcomes the variations in chocolate flavour obtained in the manufacture of chocolate using different processing conditions and/or ingredients which comprises first reducing or removing the natural flavour from the chocolate ingredients or the chocolate mass by stripping and then adding to the chocolate mass from 0.001 % to 10% by weight based on the weight of the chocolate mass of an appropriate flavour attribute associated with chocolate and obtained by adding cocoa and/or milk/dairy flavours or by adding non-cocoa/dairy flavours to a single mass.

The present invention further provides a process for manipulating the flavour of a single mass of chocolate to provide a specific house flavour in a chocolate however manufactured which comprises first reducing or removing the natural flavour from the chocolate ingredients or the chocolate mass by stripping and then adding to the chocolate mass from 0.001% to 10% by weight based on the weight of the chocolate mass of an appropriate flavour attribute associated with chocolate and obtained by adding cocoa and/or milk/dairy flavours or by adding non-cocoa/dairy flavours to a single mass to the chocolate mass.

Moreover, the present invention provides a process for manipulating the flavour of a single mass of chocolate to provide a specific consumer-recognisable flavour associated with chocolate, other than chocolate flavour enhancement or an overriding, dominant flavour different to chocolate, in a chocolate however manufactured which comprises first reducing or removing the natural flavour from the chocolate ingredients or the chocolate mass by stripping and then adding to the chocolate mass from 0.001% to 10% by weight based on the weight of the chocolate mass of an appropriate flavour attribute associated with chocolate and obtained by adding cocoa and/or milk/dairy flavours or by adding non-cocoa/dairy flavours to a single mass to the chocolate mass.

The present invention also provides the use of a flavour attribute for the preparation of chocolate having a flavour attribute associated with chocolate other than chocolate flavour enhancement or an overriding, dominant flavour different to chocolate to overcome the variations in chocolate flavour obtained in the manufacture of chocolate using different processing conditions and/or ingredients which comprises first reducing or removing the natural flavour from the chocolate ingredients or the chocolate mass by stripping and then adding to the chocolate mass from 0.001% to 10% by weight based on the weight of the chocolate mass of an appropriate flavour attribute associated with chocolate and obtained by adding cocoa and/or milk/dairy flavours or by adding non-cocoa/dairy flavours to a single mass.

The use of a flavour attribute for the preparation of chocolate advantageously comprises manipulating the flavour of a single mass of chocolate produced by a single process to obtain a desired flavour which comprises first reducing or removing the natural flavour from the chocolate ingredients or the chocolate mass by stripping and then adding to the chocolate mass from 0.001 % to 10% by weight based on the weight of the chocolate mass of an appropriate flavour attribute associated with chocolate and obtained by adding cocoa and/or milk/dairy flavours or by adding non-cocoa/dairy flavours to a single mass.

The flavour attribute may be added to any of the ingredients of the chocolate mass and at any stage of the chocolate-making process before tempering. A major advantage of the invention is the production of chocolate and compound coatings with a particular flavour attribute independently of its assets, processes, formulations and ingredient origins.

The invention permits the development of chocolate products with a global flavour, optimization of asset utilization, cost reduction, recipe flexibility and development of products with particular flavours that are preferred by the local consumers.

### EXAMPLES

The following Examples further illustrate the present invention.

### Example 1:

The flavour reactions were performed in a round bottom 3-necked stirred reactor with temperature control. Anhydrous milk fat (80g) was melted in the reactor and heated to 125°C. The flavour precursors, rhamnose (50 mM) and proline (50 mM), were added directly with the milk fat or added separately when the temperature of the milk fat had reached 125 °C. Rhamnose and proline were reacted in the milk fat for 60 min at 125 °C under reflux. The reacted material was allowed to cool to room temperature and stored at 4°C or room temperature. The flavour attributes were incorporated at 0.5% level of addition into a chocolate mass.

### Incorporation into compound chocolate:

5% by weight of water is added to liquid compound chocolate and processed by a high shearing/drying Petzomat machine to remove some of the natural flavour and give a bland compound chocolate. One gram of the reaction flavour attribute was added to 199 grams of the treated completely melted compound mass, thoroughly mixed by hand, and molded into 20 gram bars. Following cooling, bars were demolded and allowed to equilibrate to room temperature for at least 4 hours. The samples were allowed to equilibrate at 15 °C for 1-30 days before tasting.

### Incorporation into white and milk chocolate:

5% by weight of water is added to separate samples of liquid white and milk chocolate and each sample is processed by a high shearing/drying Petzomat machine to remove some of the natural flavour and give samples of bland chocolate.

One gram of the reaction flavour attribute was added to 199 grams of each of the completely melted chocolate masses and mixed manually at 50 °C to homogenize the samples, followed by precrystallization and molding into 5 g bars. Following cooling, bars were demolded and allowed to equilibrate to room temperature for at least 4 hours. The samples were allowed to equilibrate at 15 °C for 1-30 days before tasting.

The chocolate samples were evaluated by blind tasting with 6-9 trained panellists. All samples were compared to a reference chocolate mass without any flavour manipulation. Incorporation of the fat-based flavour attribute resulted in strong enhancement of attributes such as caramel, biscuit, and cookie in the chocolate mass.

### Example 2

A flavour reaction was performed according to example 1, except that 1.5% of alkaline water (Stock solution: 4 drops of 50% NaOH in 20 ml water) was added along with the rhamnose and proline. This approach facilitated the reactions at basic pH and increases the solubility of the precursors. Incorporation of 0.5% of the fat-based flavour attribute into chocolate, as described in example 1 which had previously been processed by a high shearing/drying Petzomat machine to remove some of the natural flavour and give a bland chocolate, resulted in attributes such as caramel, biscuit and cookie. Strongest caramel flavour was achieved after 30 min of reaction.

### Example 3

A flavour reaction was performed according to example 1, except that the rhamnose and proline flavour precursors were dissolved in 100 mM Na-phosphate buffer, pH 8.0 and added when the milk fat had reached a temperature of 100 °C. This approach facilitated the reactions at basic pH and increases the solubility of the precursors. The mixture was heated without closing the reactor until most of the moisture had evaporated and the product temperature had reached 125 °C. The reaction was continued under reflux at 125 °C. Total reaction time was 30-60 min. Incorporation of 0.5% of the fat-based flavour attribute into chocolate, as described in example 1, which had previously been processed by a high shearing/drying Petzomat machine to remove some of the natural flavour and give a bland chocolate, resulted in attributes such as caramel, biscuit and cookie. Strongest caramel flavour was achieved after 30 min of reaction. The strong caramel flavour was correlated to high 4-hydroxy-2,5-dimethyl-3(2H)-furanone level.

### Example 4

A flavour reaction was performed according to example 1, except that the flavour precursors were 50 mM fructose and 50 mM proline. Incorporation of 0.5% of the fat-based flavour attribute into chocolate having a bland flavour, which had previously been processed by a high shearing/drying Petzomat machine to remove some of the natural flavour, resulted in attributes such as caramel and biscuit. Strongest biscuit flavour was achieved after 60 min of reaction. Fructose/proline reaction in anhydrous milk fat resulted in the highest accumulation of 2-acetyl-1-pyrroline. The level of 4-hydroxy-2,5-dimethyl-3(2H)-furanone was lower as compared to reactions with rhamnose.

### Example 5

A flavour reaction was performed according to example 4, except that the flavour precursors were 100 mM fructose and 50 mM proline. Incorporation of 0.5% of the fat-based flavour attribute into chocolate having a bland flavour, which had previously been processed by a high shearing/drying Petzomat machine to remove some of the natural flavour, resulted in attributes such as caramel, cookie and biscuit. The caramel attribute was enhanced by increasing the fructose concentration from 50 to 100 mM.

### Example 6

A flavour reaction was performed according to example 4, except that the flavour precursors were 1% fructose and 1% casein hydrolysate. The casein hydrolysate was prepared by standard techniques using Flavourzyme 1000 L (fungal protease/peptidase mixture from Novo Nordisk, Denmark). Hydrolysis was performed at 50°C using 1% enzyme by weight of protein content to achieve approximately 50% degree of hydrolysis. Incorporation of 0.5% of the fat-based flavour attribute into chocolate, which had previously been processed by a high shearing/drying Petzomat machine to remove some of the natural flavour, resulted in an increase in the caramel attribute.

### Example 7

Ornithine, which is a well known precursor of biscuit/bread/baked impact compounds was also reacted in the milk fat system. A flavour reaction was performed according to example 2, except that the flavour precursors were 50 mM rhamnose and 50 mM ornithine. Incorporation of 1.0 % of the fat-based flavour attribute into chocolate with a bland flavour, made from cocoa which had been pretreated during roasting in the presence of 10% by weight of water which was later evaporated taking with it the flavour, resulted in an increase in the caramel attribute. Although a flavour impact was achieved with ornithine, it was less pronounced than with proline.

### Example 8

A flavour reaction was performed according to example 1, except that the flavour precursors were 50 mM fucose and 50 mM proline. Incorporation of 1.0 % of the fat-based flavour attribute into chocolate, made from cocoa which had been pretreated during roasting in the presence of 7.5% by weight of water which was later evaporated taking with it the flavour, resulted in an increase in the caramel and biscuit attributes.

### Example 9

Cocoa butter can also be used as reaction medium. A flavour reaction was performed according to example 1 except that the reaction medium was cocoa butter. The flavour precursors were 50 mM rhamnose and 50 mM proline. Incorporation of 1.0 % of the fat-based flavour attribute into chocolate having a bland flavour, which had previously been processed by a high shearing/drying Petzomat machine to remove some of the natural flavour, resulted in an increase in the caramel and biscuit attributes. Again, the combination of proline/rhamnose in presence of 5% buffer, pH 8.0 was proven optimal to obtain high 4-hydroxy-2,5-dimethyl-3(2H)-furanone concentration. Although the 4-hydroxy-2,5-dimethyl-3(2H)-furanone concentration was high in these samples, the panellists perceived lower caramel as compared to chocolate samples prepared with reaction flavours in milk fat. Thus, milk fat seems to contribute to the flavour when incorporated in the final chocolate.

### Example 10

A flavour reaction was performed according to example 3 except that the reaction medium was cocoa liquor. The flavour precursors were 50 mM rhamnose and 50 mM proline. Incorporation of 1.0 % of the fat-based flavour attribute into chocolate having a bland flavour, which had previously been processed by a high shearing/drying Petzomat machine to remove some of the natural flavour, resulted in an increase in the caramel and biscuit attributes.

### Example 11

A flavour reaction was performed according to example 5 except that the reaction medium was lipase hydrolysed milk fat. Hydrolysis was performed with an immobilized lipase, Lipozyme RM IM from Novo Nordisk, Denmark. The flavour precursors were 50 mM proline and 100 mM fructose. Incorporation of 0.2 % of the fat-based flavour attribute into chocolate, which had previously been processed by a high shearing/drying Petzomat machine to remove some of the natural flavour, resulted in an increase in the caramel, biscuit, and cheesy attributes.

### Example 12: Enzyme-treated 1 M KOH-soluble extract from cocoa shell

### Preparation of 1M KOH-soluble extract:

10g of cocoa shell was extracted in 200 ml of 1 M KOH containing 20 mM NaBH₄ for 4 hours at room temperature. The suspension was centrifuged and the supernatant neutralised with acetic acid, dialysed and then freeze dried. The composition of the extracted polysaccharide is shown in Table 1.

**Table 1 : Composition of 1 M KOH-soluble cocoa shell fraction**

| | Rha | Fuc | Ara | Xyl | Man | Gal | Glc | UA* | Total |
|---|---|---|---|---|---|---|---|---|---|
| µg/mg | 33.2 | 1.6 | 13.9 | 22.1 | 25.3 | 93.4 | 42.5 | 290 | 522 |
| Mole% | *7.1* | *0.3* | *3.3* | *5.2* | *4.7* | *17.5* | *7.9* | *54.0* | - |

### Enzymatic treatment:

An aliquot of the extract obtained (1g in 50 ml of distilled water) was hydrolysed with 0.25 ml of Viscozyme L, a multi-enzyme complex produced from *Aspergillus aculeatus* (Novozymes A/S, Denmark),at 40°C for 16hours with stirring. The pH during incubation was 4.9. The mixture was then freeze dried. Determination of free rhamnose in the final product indicated that 18.2 % of rhamnose was liberated from the 1 M KOH-soluble cocoa shell fraction by enzymatic treatment. The results are shown in Table 2.

**Table 2:**

| | Experimental | Rha (µg) | Powder (mg) | Rha(%) |
|---|---|---|---|---|
| Total | 2 M TFA - 120°C - 2 h | 155 | 3.1 | 5.0 |
| Liberated by Viscozyme | Soluble in 70% EtOH | 246 | 27 | 0.91 |
| | | | Yield (%) | 18.2 |

### Example 13: Production of acid hydrolysate from Na₂CO₃-soluble pectin of cocoa shell

11.5 g of sodium carbonate extracted pectin was hydrolysed in 575ml 2M HCl by autoclaving at 120°C for 1h. The hydrolysate was filtered to remove black sediment and then dried. When the volume was reduced to about 50ml acetic acid was added and the solution dried down and held under vacuum for 3 days over NaOH pellets to remove residual acid. Water was added and the solution was evaporated to dryness and the flask was dried again over P₂O₅ and NaOH pellets. The drying down process was repeated twice.

The dried material weighed 9.6 g. It was dissolved in 100 ml water and half was adjusted to pH 5.8 with 2-3 ml of 2.5 M NH₄OH and filtered through glass fibre paper to remove undissolved residue and passed through a column of QAE Sephadex which had been converted to the formate form. The hydrolysate in the column was eluted with 350ml water. The neutral fraction, which was not retained on the column and the acidic fraction (recovered by eluting the column with 350 ml 10% formic acid) were each dried down on the rotovap and the latter fraction put over NaOH and P₂O₅ under vacuum overnight. Table 3 shows the composition of the hydrolysate fractions prepared.

| | Wt of fractions: |
|---|---|
| Original Na₂CO₃-sol pectin | 11.5 g |
| Insoluble fraction after hydrolysis | 1.4 g |
| Total soluble acid hydrolysate | 8.4 g |
| Neutral fraction (from half the hydrolysate) | 1.4 g |
| Acidic fraction (from half the hydrolysate) | 2.4 g |

**Table 3 : Composition of hydrolysate fractions (µg/mg)**

| | Rha | Fuc | Ara | Xyl | Man | Gal | Glc | UA | Total |
|---|---|---|---|---|---|---|---|---|---|
| Total | 34.0 | 0.3 | 3.2 | 1.0 | 9.7 | 33.9 | 10.1 | 210.4 | 303 |
| Neutral | 68.9 | 0.8 | 4.6 | 1.6 | 17.2 | 59.6 | 18.3 | 189.0 | 358 |
| Acid | 2.9 | 4.3 | 0.7 | 0.9 | 1.3 | 4.6 | 2.8 | 351.0 | 369 |

### Example 14: Use of hydrolysates in the preparation of reaction flavours and incorporation into white chocolate

The hydrolysates prepared in accordance with examples 12 and 13, including the total hydrolysate and the hydrolysate purified by cation exchange were incorporated into a reaction flavour comprising 8.5g milk fat, 1g shell hydrolysate (5mM free rhamnose), 50mM Proline, 5% phosphate buffer at pH 8.0, 125°C for 60 minutes. The reaction flavour attribute thus obtained was then incorporated into white chocolate having a bland flavour, which had previously been processed by a high shearing/drying Petzomat machine to remove some of the natural flavour, at a level of 1.0-1.5% by weight based on the total mentioned chocolate in accordance with the afore-mentioned recipe and subjected to sensory evaluation. Sensory evaluation of the white chocolate produced using the hydroylsates of examples 12 and 13 showed an increased caramel flavour.

Example 15: Use of hydrolysates in the preparation of reaction flavours and incorporation into milk chocolate

The total hydrolysate and the hydrolysate prepared by cation exchange prepared in accordance with example 13 were incorporated into reaction flavours A and B comprising
A) 8.5g milk fat, 2.28g total shell hydrolysate (50mM free rhamnose), 50mM Proline, 5% phosphate buffer at pH 8.0, 125°C for 60 minutes; and
B) 10.5g milk fat, 1.11 g shell hydrolysate purified by cation exchange (50mM free rhamnose), 50mM Proline, 5% phosphate buffer at pH 8.0, 125°C for 60 minutes.

Reaction flavour attributes A and B were then incorporated into milk chocolate which had previously been processed by a high shearing/drying Petzomat machine to remove some of the natural flavour, at a level of 3% by weight based on the total mentioned chocolate in accordance with the afore-mentioned recipe and subjected to sensory evaluation. Sensory evaluation of both milk chocolates A and B prepared showed an increased caramel flavour.

### Example 16: Use of enzymatically treated cocoa liquor in reaction flavours :

A reference cocoa reaction flavour was prepared by reacting 0.8% Leu, 1.45% Phe, 0.8% Val, 1.5% Fructose, 1.5% water (4 drops of NaOH in 20ml water) and 94% propylene glycol at 125°C for 60 min under reflux. Reaction flavours, prepared with cocoa hydrolysates were generated by replacing the amino acids with 1% lyophilised hydrolysate. Tasting was performed on a 0.1% solution in 1% sucrose. The reaction flavours produced with cocoa hydrolysates were tasted and compared against the reference.

The following enzyme treatments were investigated: 24 h and 6 h *in-vitro* fermentation/Flavourzyme treatment, and 24 h and 6 h *in-vitro* fermentation (only endogenous enzyme system).

Reaction flavour attributes prepared with enzyme-treated liquor exhibited stronger cocoa flavour compared to a control prepared with untreated unfermented/unroasted cocoa liquor. In particular, the reaction flavour attributes produced with liquor that was treated by only *in-vitro* fermentation seemed strongest in cocoa flavour.

The reaction flavour attributes generated with 1% cocoa liquor hydrolysates in PG do not contain similar amount of reacting amino groups as in the amino acid reference. The reference is prepared with 0.8% leu, 1.45% phe, 0.8% val, 1.5% fructose, whereas the reaction mixtures with cocoa hydrolysates contains substantially lower level of free amino groups (10-15% protein, DH 10-30). Thus, the amount of reactive amine flavour precursors can be increased substantially by increasing the proportion of hydrolysed cocoa liquor.

The cocoa hydrolysates, described in this example, can be used as a base ingredient in chocolate process flavour reactions to introduce a base or specific note for a full body chocolate/cocoa flavour concentrate by adding 2% by weight of the concentrate to a melted chocolate mass having a bland flavour, which had previously been processed by a high shearing/drying Petzomat machine to remove some of the natural flavour,

### Example 17

10 parts of skimmed milk powder and 90 parts of milk fat are blended and reacted at 125°C for 60 minutes to give a caramel reaction flavour attribute.

Incorporation of 1.0 % of the above caramel flavour attribute into chocolate with a bland flavour, made from cocoa which had been pretreated during roasting in the presence of 10% by weight of water which was later evaporated taking with it the flavour, resulted in an increase in the caramel attribute.

### Example 18

A milk chocolate compound coating was first prepared according to the following general composition:

| **Component** | **Weight Percentage** |
|---|---|
| Sucrose | 50.00 |
| Non fat dry milk (NFDM) | 13.78 |
| Cocoa | 6.00 |
| Vegetable Fat | 30.00 |
| Vanillin | 0.02 |
| Lecithin | 0.2 |

The liquid compound chocolate composition is processed with the addition of 5% of water by a high shearing/drying Petzomat machine to remove some of the natural flavour and give a bland compound chocolate.

One flavor compound was added to the milk chocolate compound coating and evaluated by a descriptive panel trained in tasting chocolate and cocoa:

| Compound | Concentration (ppm) | |
|---|---|---|
| | 2174-112a | 2174-112b |
| 2,5-dimethyl-4-hydroxy-3(2H)-furanone | 0 | 10 |

Results showed that addition of 2,5-dimethyl-4-hydroxy-3(2H)-furanone at 10 ppm to the compound coating increased significantly the caramelized sugar (p-value = 0.0112) and cocoa (p-value = 0.0075) attributes relative to the unflavored control.

### Example 19

Volatile cocoa aroma compounds from a cocoa nib grinder were captured and condensed using technology described in United States Patent No. 6090427. A portion of this residue was added to a chocolate compound coating processed in a similar way to the one described in example 18 to give a bland flavour.

| Compound | Concentration (%) | |
|---|---|---|
| | 2176-17 | 2174-53c |
| Grinder Gas Residue | 0 | 0.15 |

Results showed that addition of the grinder gas residue to the compound coating increased significantly the Fruity attribute (p-value =0.0016) relative to the unflavored control.

### Example 20

One flavor compound was added to a milk chocolate compound coating similar processed in a similar way to the one described in example 18 to give a bland flavour.

| Compound | Concentration (ppm) | |
|---|---|---|
| | Unflavored | 2150-36C |
| Phenethyl alcohol | 0 | 20 |

When evaluated blind against the unflavored control by panelist experience in chocolate tasting, the sample with added phenethyl alcohol was considered to be higher in a floral (rose-like) attribute by all panelists.

## Claims

1. A process for manipulating the flavour of a single mass of chocolate which comprises first reducing or removing the natural flavour from the chocolate ingredients or the chocolate mass by stripping and then adding to the chocolate mass from 0.001% to 10% by weight based on the weight of the chocolate mass of a flavour attribute associated with chocolate and obtained by adding cocoa and/or milk/dairy flavours or by adding non-cocoa/dairy flavours to a single mass.

2. A process according to claim 1 wherein the natural chocolate flavour is reduced or removed from the chocolate mass by pretreating cocoa during or following roasting with water which is later evaporated and takes with it the flavour.

3. A process according to claim 1 wherein the natural chocolate flavour is reduced or removed from the chocolate mass by adding water to liquid chocolate as it is processed by a high shearing/drying machine.

4. A process according to claim 1 wherein the natural chocolate flavour is reduced or removed from the chocolate mass by avoiding the use of commercially available high heat-treated milk powders which possess strong cooked "Maillard" flavours.

5. A process according to claim 1 wherein the natural chocolate flavour is reduced or removed from the chocolate mass by using spinning discs, PDAT reactors (Carle & Montanari) with inert gas, or scraped surface heat exchangers with forced air or vacuum applied.

6. A process according to claim 1 wherein the cocoa/dairy flavour attributes added to the chocolate mass are cocoa and/or chocolate products, distillates, solvent extracts, C02 extracts, and a cocoa aroma/flavour obtained by cryogenic aroma capture from aroma gas which evolves during the processing of cocoa, natural, plant extract, artificial or nature identical compounded flavours labeled as chocolate, milky, dairy, cream, cocoa, cocoa/chocolate reaction flavours, dairy product extracts or biogenerated flavours.

7. A process according to claim 1 wherein the non-cocoa/dairy flavour attribute added to the chocolate mass is a concentrate formed by adding a mixture of flavour precursors comprising (A) proline, ornithine or protein hydrolysate, and (B) rhamnose, fructose or fucose, to a fat-based medium and heating the mixture to about 100-140 C for about 10-120 minutes.

8. A process according to claim 1 wherein the non-cocoa/dairy flavour attribute added to the chocolate mass is a Maillard reaction between defined mixtures of amino acids and sugars in chocolate compatible fat systems, roasted using cocoa liquor technology in the presence or absence of water.

9. A process according to claim 1 wherein the non-cocoa/dairy flavour attribute added to the chocolate mass is an enzymatic hydrolysate of cocoa polysaccharides.

10. A process according to claim 1 wherein the non-cocoa/dairy flavour attribute added to the chocolate mass is a malty flavour obtained by acid treatment of a cocoa liquor followed by a protease treatment.

11. A process according to claim 1 wherein a crumb flavour attribute is added to a non crumb chocolate mass in an amount of from 0.1% to 5%.

12. A process according to claim 1 wherein the flavour attribute is a caramel flavour attribute provided by the reaction of skimmed milk powder in a fat system at an elevated temperature.

13. A process for manipulating the flavour of a single mass of chocolate according to claim 1 to provide a chocolate having a flavour attribute other than chocolate flavour enhancement or an overriding, dominant flavour different to chocolate and which flavour attribute overcomes the variations in chocolate flavour obtained in the manufacture of chocolate using different processing conditionsand/or ingredients which comprises first reducing or removing the natural flavour from the chocolate ingredients or the chocolate mass by stripping and then adding to the chocolate mass from 0.001% to 10% by weight based on the weight of the chocolate mass of an appropriate flavour attribute associated with chocolate and obtained by adding cocoa and/or milk/dairy flavours or by adding non-cocoa/dairy flavours to a single mass.

14. A process for manipulating the flavour of a single mass of chocolate according to claim 1 to provide a specific house flavour in a chocolate however manufactured which comprises first reducing or removing the natural flavour from the chocolate ingredients or the chocolate mass by stripping and then adding to the chocolate mass from 0.001 % to 10% by weight based on the weight of the chocolate mass of an appropriate flavour attribute associated with chocolate and obtained by adding cocoa and/or milk/dairy flavours or by adding non-cocoa/dairy flavours to a single mass to the chocolate mass.

15. A process for manipulating the flavour of a single mass of chocolate according to claim 1 to provide a specific consumer-recognisable flavour associated with chocolate, other than chocolate flavour enhancement or an overriding, dominant flavour different to chocolate, in a chocolate however manufactured which comprises first reducing or removing the natural flavour from the chocolate ingredients or the chocolate mass by stripping and then adding to the chocolate mass from 0.001 % to 10% by weight based on the weight of the chocolate mass of an appropriate flavour attribute associated with chocolate and obtained by adding cocoa and/or milk/dairy flavours or by adding non-cocoa/dairy flavours to a single mass to the chocolate mass.

16. Use of a flavour attribute for the preparation of chocolate having a flavour attribute associated with chocolate other than chocolate flavour enhancement or an overriding, dominant flavour different to chocolate to overcome the variations in chocolate flavour obtained in the manufacture of chocolate using different processing conditions and/or ingredients which comprises first reducing or removing the natural flavour from the chocolate ingredients or the chocolate mass by stripping and then adding to the chocolate mass from 0.001% to 10% by weight based on the weight of the chocolate mass of an appropriate flavour attribute associated with chocolate and obtained by adding cocoa and/or milk/dairy flavours or by adding non-cocoa/dairy flavours to a single mass.

17. Use of a flavour attribute for the preparation of chocolate according to claim 16 which comprises manipulating the flavour of a single mass of chocolate produced by a single process to obtain a desired flavour which comprises first reducing or removing the natural flavour from the chocolate ingredients or the chocolate mass by stripping and then adding to the chocolate mass from 0.001 % to 10% by weight based on the weight of the chocolate mass of an appropriate flavour attribute associated with chocolate and obtained by adding cocoa and/or milk/dairy flavours or by adding non-cocoa/dairy flavours to a single mass.

## Patentansprüche

1. Verfahren zum Manipulieren des Aromas einer Einzelmasse aus Schokolade, welches zuerst ein Reduzieren oder ein Entfernen des natürlichen Aromas aus den Schokoladenzutaten oder der Schokoladenmasse durch Strippen und dann Hinzufügen von 0,001 Gew.-% bis 10 Gew.-%, basierend auf dem Gewicht der Schokoladenmasse, eines Aromamodifikators, der mit Schokolade assoziiert wird, und der durch Hinzufügen von Kakao- und/oder Milch-/Molkereiaromen oder durch Hinzufügen von Nicht-Kakao/-Molkereiaromen zu einer Einzelmasse erhalten wird, zu der Schokoladenmasse umfasst.

2. Verfahren nach Anspruch 1, wobei das natürliche Schokoladenaroma in der Schokoladenmasse verringert oder daraus entfernt wird, indem der Kakao während oder nach dem Rösten mit Wasser vorbehandelt wird, das später verdampft wird und das das Aroma mit sich nimmt.

3. Verfahren nach Anspruch 1, wobei das natürliche Schokoladenaroma in der Schokoladenmasse verringert oder daraus entfernt wird, indem Wasser zu der flüssigen Schokolade zugefügt wird, wenn diese mit einer stark zerkleinernden /Trocknungsvorrichtung verarbeitet wird.

4. Verfahren nach Anspruch 1, wobei das natürliche Schokoladenaroma in der Schokoladenmasse reduziert oder daraus entfernt wird, indem die Verwendung von handelsüblichen, durch Hocherhitzung behandelten Milchpulvern vermieden wird, die starke "Maillard"-Kocharomen besitzen.

5. Verfahren nach Anspruch 1, wobei das natürliche Schokoladenaroma in der Schokoladenmasse unter Verwendung von Rotationsscheiben-, PDAT-Reaktoren (Carle & Montanari) mit Inertgas oder Kratzwärmetauschern mit Gebläseluft oder angelegtem Vakuum reduziert oder daraus entfernt wird.

6. Verfahren nach Anspruch 1, wobei die Kakao-/Molkereiaromamodifikatoren, die zu der Schokoladenmasse hinzugefügt werden, Kakao- und/oder Schokoladenprodukte, Destillate, Lösemittelextrakte, CO₂-Extrakte und ein Kakaoaroma/-geschmack, das/der durch Auffangen von Aromen aus dem Aromagas bei Tieftemperatur erhalten wird, das während der Verarbeitung von Kakao entsteht, natürliche, Pflanzenextrakt-, künstliche oder naturidentisch zusammengesetzte Geschmacksstoffe sind, bezeichnet als Schokoladen-, Milch-, Molkerei-, Sahne-, Kakao-, Kakao-/Schokoladen-Reaktionsaromen, Molkereiproduktextrakte oder biologisch erzeugte Aromen.

7. Verfahren nach Anspruch 1, wobei der Nicht-Kakao-/-Molkereimodifikator, der zu der Schokoladenmasse hinzugefügt wird, ein Konzentrat ist, das durch Hinzufügen einer Mischung aus Geschmacksprecursoren, die (A) Prolin, Ornithin oder Protein-Hydolysate und (B) Rhamnose, Fruktose oder Fucose umfassen, zu einem fett-basierten Medium und durch Erhitzen der Mischung auf etwa 100-140 °C etwa 10-120 Minuten lang gebildet wird.

8. Verfahren nach Anspruch 1, wobei der Nicht-Kakao-/-Molkereimodifikator, der zu der Schokoladenmasse hinzugefügt wird, eine Maillard-Reaktion aus definierten Mischungen aus Aminosäuren und Zuckern in Schokolade-kompatiblen Fettsystemen ist, die unter Verwendung einer Kakaolikör-Technologie in Gegenwart oder Abwesenheit von Wasser geröstet werden.

9. Verfahren nach Anspruch 1, wobei der Nicht-Kakao/-Molkereimodifikator, der zu der Schokoladenmasse hinzugefügt wird, ein enzymatisches Hydrolysat von Kakao-Polysacchariden ist.

10. Verfahren nach Anspruch 1, wobei der Nicht-Kakao/-Molkereimodifikator, der zu der Schokoladenmasse hinzugefügt wird, ein malziges Aroma ist, das durch eine saure Behandlung eines Kakaolikörs, gefolgt von einer Protease-Behandlung, erhalten wird.

11. Verfahren nach Anspruch 1, wobei ein Crumb-Aromamodifikator zu einer Crumbfreien Schokoladenmasse in einer Menge von 0,1 % bis 5 % zugefügt wird.

12. Verfahren nach Anspruch 1, wobei der Aromamodifikator ein Karamell-Aromamodifikator ist, der durch die Reaktion von Magermilchpulver in einem Fettsystem bei einer erhöhten Temperatur bereitgestellt wird.

13. Verfahren zum Manipulieren des Aromas einer Einzelmasse aus Schokolade nach Anspruch 1, um eine Schokolade bereitzustellen, die einen anderen Aromamodifikator als einen Schokolade-Geschmacksverstärker oder einen überlagernden, dominanten Geschmack, der sich von Schokolade unterscheidet, aufweist, wobei der Aromamodifikator die Schwankungen im Schokoladenaroma beseitigt, die bei der Herstellung der Schokolade unter Verwendung verschiedener Verarbeitungsbedingungen und/oder Zutaten erhalten werden, was zunächst ein Reduzieren oder ein Entfernen des natürlichen Aromas aus den Schokoladenzutaten oder der Schokoladenmasse durch Strippen und dann ein Hinzufügen von 0,001 Gew.-% bis 10 Gew.-% basierend auf dem Gewicht der Schokoladenmasse, eines geeigneten Aromamodifikators, der mit Schokolade assoziiert wird und der durch Hinzufügen von Kakao- und/oder Milch-/Molkereiaromen oder durch Hinzufügen von Nicht-Kakao-/- Molkereiaromen zu einer Einzelmasse erhalten wird, zu der Schokoladenmasse umfasst.

14. Verfahren zum Beeinflussen des Aromas einer Einzelmasse aus Schokolade nach Anspruch 1, um ein spezifisches Haus-Aroma in einer wie auch immer hergestellten Schokolade bereitzustellen, was zuerst ein Reduzieren oder ein Entfernen des natürlichen Aromas aus den Schokoladenzutaten oder der Schokoladenmasse durch Strippen und dann ein Hinzufügen von 0,001 Gew.-% bis 10 Gew.-%, basierend auf dem Gewicht der Schokoladenmasse, eines geeigneten Aromamodifikators, der mit Schokolade assoziiert ist und der durch Hinzufügen von Kakao und/oder Milch-/- Molkereiaromen oder durch Hinzufügen von Nicht-Kakao-/-Molkereiaromen zu einer Einzelmasse erhalten wird, zu der Schokoladenmasse umfasst.

15. Verfahren zum Manipulieren des Aromas einer Einzelmasse aus Schokolade nach Anspruch 1, um ein spezifisches, für einen Konsumenten wiedererkennbares Aroma das mit Schokolade assoziiert ist, das anders ist als einen Schokolade-Geschmacksverstärker, oder einen überlagernden, dominanten Geschmack, der sich von Schokolade unterscheidet, in einer wie auch immer hergestellten Schokolade bereitzustellen, was zuerst ein Reduzieren oder ein Entfernen des natürlichen Aromas aus den Schokoladenzutaten oder der Schokoladenmasse durch Strippen und dann ein Hinzufügen von 0,001 Gew.-% bis 10 Gew.-%, basierend auf dem Gewicht der Schokoladenmasse, eines geeigneten Aromamodifikators, der mit Schokolade assoziiert ist und der durch Hinzufügen von Kakao und/oder Milch-/-Molkereiaromen oder durch Hinzufügen von Nicht-Kakao-/-Molkereiaromen zu einer Einzelmasse erhalten wird, zu der Schokoladenmasse umfasst.

16. Verwendung eines Aromamodifikators für die Herstellung einer Schokolade mit einem Aromamodifikator, der mit Schokolade assoziiert ist, anders als ein Schokolade-Geschmacksverstärker, oder mit einem überlagernden, dominanten Aroma, das sich von Schokolade unterscheidet, um Schwankungen beim Schokoladenaroma zu beseitigen, die bei der Herstellung der Schokolade unter Verwendung verschiedener Verarbeitungsbedingungen und/oder Zutaten erhalten werden, was zuerst ein Reduzieren oder ein Entfernen des natürlichen Aromas aus den Schokoladenzutaten oder der Schokoladenmasse durch Strippen und dann ein Hinzufügen von 0,001 Gew.-% bis 10 Gew.-%, basierend auf dem Gewicht der Schokoladenmasse, eines geeigneten Aromamodifikators, der mit Schokolade assoziiert ist und der durch Hinzufügen von Kakao und/oder Milch-/-Molkereiaromen oder durch Hinzufügen von Nicht-Kakao-/-Molkereiaromen zu einer Einzelmasse erhalten wird, zu der Schokoladenmasse umfasst.

17. Verwendung eines Aromamodifikators für die Herstellung einer Schokolade nach Anspruch 16, die das Modifizieren des Aromas einer Einzelmasse aus Schokolade umfasst, die in einem Einzelverfahren hergestellt wird, um ein gewünschtes Aroma zu erhalten, was zuerst ein Reduzieren oder ein Entfernen des natürlichen Aromas aus den Schokoladenzutaten oder der Schokoladenmasse durch Strippen und dann ein Hinzufügen von 0,001 Gew.-% bis 10 Gew.-%, basierend auf dem Gewicht der Schokoladenmasse, eines geeigneten Aromamodifikators, der mit Schokolade assoziiert ist und der durch Hinzufügen von Kakao und/oder Milch-/-Molkereiaromen oder durch Hinzufügen von Nicht-Kakao-/-Molkereiaromen zu einer Einzelmasse erhalten wird, zu der Schokoladenmasse umfasst.

## Revendications

1. Procédé pour modifier l'arôme d'une masse unique de chocolat, qui comprend tout d'abord la réduction ou l'élimination de l'arôme naturel des ingrédients du chocolat ou de la masse de chocolat par entraînement et ensuite l'addition à la masse de chocolat de 0,001 % à 10 % en poids, sur la base du poids de la masse de chocolat, d'un caractère d'arôme associé au chocolat et obtenu en ajoutant des arômes de cacao et/ou de lait/produits laitiers ou en ajoutant des arômes ne consistant pas en arômes de cacao/produits laitiers à une masse unique.

2. Procédé suivant la revendication 1, dans lequel l'arôme naturel de chocolat est réduit ou éliminé de la masse de chocolat en prétraitant le cacao pendant ou après torréfaction avec de l'eau qui est évaporée ultérieurement et qui entraîne avec elle l'arôme.

3. Procédé suivant la revendication 1, dans lequel l'arôme naturel de chocolat est réduit ou éliminé de la masse de chocolat en ajoutant de l'eau à du chocolat liquide lors de son traitement par une machine à fort cisaillement/de séchage.

4. Procédé suivant la revendication 1, dans lequel l'arôme naturel de chocolat est réduit ou éliminé de la masse de chocolat en évitant d'utiliser des laits en poudre traités aux hautes températures possédant des arômes de « Maillard » cuits intenses.

5. Procédé suivant la revendication 1, dans lequel l'arôme naturel de chocolat est réduit ou éliminé de la masse de chocolat en utilisant des disques centrifuges, des réacteurs PDAT (Carle & Montanari) avec un gaz inerte, ou des échangeurs de chaleur à couche mince avec application d'air forcé ou mise sous vide.

6. Procédé suivant la revendication 1, dans lequel les caractéristiques d'arôme de cacao/produits laitiers ajoutées à la masse de chocolat sont des produits à base de cacao et/ou de chocolat, des distillats, des extraits au solvant, des extraits au CO₂ et un parfum/arôme de cacao obtenu par capture d'arôme cryogénique à partir du gaz d'arôme qui se dégage au cours du traitement du cacao, d'un extrait végétal naturel, d'arômes mixtes synthétiques ou identiques aux arômes naturels désignés en tant qu'arômes de chocolat, de lait, de produits laitiers, de crème, de cacao, de réaction cacao/chocolat, d'extraits de produits laitiers ou d'arômes bio-engendrés.

7. Procédé suivant la revendication 1, dans lequel la caractéristique d'arôme ne consistant pas en arôme de cacao/produit laitier ajoutée à la masse de chocolat est un concentré formé en ajoutant un mélange de précurseurs d'arôme comprenant (A) de la proline, de l'ornithine ou un hydrolysat de protéines, et (B) du rhamnose, du fructose ou du fucose, un milieu à base de matières grasses et en chauffant le mélange à une température comprise dans l'intervalle d'environ 100 à 140°C pendant une période de temps d'environ 10 à 120 minutes.

8. Procédé suivant la revendication 1, dans lequel la caractéristique d'arôme ne consistant pas en arôme de cacao/produit laitier ajoutée à la masse de chocolat est une réaction de Maillard entre des mélanges définis d'aminoacides et de sucres dans des systèmes de matières grasses compatibles avec le chocolat, torréfiés en utilisant la technologie de la liqueur de cacao en la présence ou en l'absence d'eau.

9. Procédé suivant la revendication 1, dans lequel la caractéristique d'arôme ne consistant pas en arôme de cacao/produit laitier ajoutée à la masse de chocolat est un hydrolysat enzymatique de polysaccharides du cacao.

10. Procédé suivant la revendication 1, dans lequel la caractéristique d'arôme ne consistant pas en arôme de cacao/produit laitier ajoutée à la masse de chocolat est un arôme de malte obtenu par traitement avec un acide d'une liqueur de cacao puis par traitement avec une protéase.

11. Procédé suivant la revendication 1, dans lequel une caractéristique d'arôme de mie de pain est ajoutée à une masse de chocolat sans arôme de mie de pain, en une quantité de 0,1 % à 5 %.

12. Procédé suivant la revendication 1, dans lequel la caractéristique d'arôme est une caractéristique d'arôme de caramel fournie par réaction de lait écrémé en poudre dans un système de matières grasses à une température élevée.

13. Procédé pour modifier l'arôme d'une masse unique de chocolat suivant la revendication 1, afin de fournir un chocolat ayant une caractéristique d'arôme autre qu'un renforcement de l'arôme de chocolat ou un arôme principal dominant différent de celui du chocolat, caractéristique d'arôme qui supprime les variations de l'arôme de chocolat engendrées lors de la production du chocolat en utilisant des conditions de traitement différentes et/ou des ingrédients différents, qui comprend tout d'abord la réduction ou l'élimination de l'arôme naturel des ingrédients du chocolat ou de la masse de chocolat par entraînement et ensuite l'addition à la masse de chocolat d'une quantité de 0,001 % à 10 % en poids, sur la base du poids de la masse de chocolat, d'une caractéristique d'arôme appropriée associée au chocolat et obtenue en ajoutant des arômes de cacao et/ou de lait/produits laitiers ou en ajoutant des arômes ne consistant pas en arômes de cacao/produits laitiers à une masse unique.

14. Procédé pour modifier l'arôme d'une masse unique de chocolat suivant la revendication 1 pour fournir un arôme maison spécifique dans un chocolat produit d'une manière quelconque, qui comprend tout d'abord la réduction ou l'élimination de l'arôme naturel des ingrédients du chocolat ou de la masse de chocolat par entraînement et ensuite l'addition à la masse de chocolat d'une quantité de 0,001 % à 10 % en poids, sur la base du poids de la masse de chocolat, d'une caractéristique d'arôme appropriée associée au chocolat et obtenue en ajoutant des arômes de cacao et/ou de lait/produits laitiers ou en ajoutant des arômes ne consistant pas en arômes de cacao/produits laitiers à une masse unique de chocolat.

15. Procédé pour modifier l'arôme d'une masse unique de chocolat suivant la revendication 1 pour fournir un arôme spécifique, reconnaissable par le consommateur, associé au chocolat, autre qu'un renforcement de l'arôme de chocolat ou un arôme principal dominant différent de celui du chocolat, dans un chocolat produit d'une manière quelconque, qui comprend tout d'abord la réduction ou l'élimination de l'arôme naturel des ingrédients du chocolat ou de la masse de chocolat par entraînement et ensuite l'addition à la masse de chocolat d'une quantité de 0,001 % à 10 % en poids, sur la base du poids de la masse de chocolat, d'une caractéristique d'arôme appropriée associée au chocolat et obtenue en ajoutant des arômes de cacao et/ou de lait/produits laitiers ou en ajoutant des arômes ne consistant pas en arômes de cacao/produits laitiers à une masse unique de chocolat.

16. Utilisation d'une caractéristique d'arôme pour la préparation d'un chocolat ayant une caractéristique d'arôme associée au chocolat autre qu'un renforcement de l'arôme de chocolat ou un arôme principal dominant différent de celui du chocolat pour supprimer les variations de l'arôme de chocolat obtenues lors de la production du chocolat en utilisant des conditions de traitement différentes et/ou des ingrédients différents, qui comprend tout d'abord la réduction ou l'élimination de l'arôme naturel des ingrédients du chocolat ou de la masse de chocolat par entraînement et ensuite l'addition à la masse de chocolat d'une quantité de 0,001 % à 10 % en poids, sur la base du poids de la masse de chocolat, d'une caractéristique d'arôme appropriée associée au chocolat et obtenue en ajoutant des arômes de cacao et/ou de lait/produits laitiers ou en ajoutant des arômes ne consistant pas en arômes de cacao/produits laitiers à une masse unique.

17. Utilisation d'une caractéristique d'arôme pour la préparation de chocolat suivant la revendication 16, qui comprend la modification de l'arôme d'une masse unique de chocolat produite par un procédé unique afin d'obtenir un arôme désiré, qui comprend tout d'abord la réduction ou l'élimination de l'arôme naturel des ingrédients du chocolat ou de la masse de chocolat par entraînement et ensuite l'addition à la masse de chocolat d'une quantité de 0,001 % à 10 % en poids, sur la base du poids de la masse de chocolat, d'une caractéristique d'arôme appropriée associée au chocolat et obtenue en ajoutant des arômes de cacao et/ou de lait/produits laitiers ou en ajoutant des arômes ne consistant pas en arômes de cacao/produits laitiers à une masse unique.
